# EUROPEAN PATENT SPECIFICATION

(11) **EP 0 507 378 B1**
(45) Date of publication and mention of the grant of the patent: **28.12.1994**
(21) Application number: 92200796.8
(22) Date of filing: 20.03.1992
(51) Int. Cl.: A01G 9/12

(54) **Arrangement for training plants and operating procedure and device for the embodiment of the aforementioned arrangement**
Anordnung zum Führen von Pflanzen und Betriebsverfahren und Vorrichtung zum Herstellen dieser Anordnung
Arrangement pour guider des plantes et procédé opératoire et dispositif pour la fabrication dudit arrangement

(30) Priority: 04.04.1991 BE 9100312
(43) Date of publication of application: 07.10.1992
(73) Proprietor: Sebrechts, Jan, B-2520 Broechem-Ranst (BE); Sebrechts, Jozef, B-2520 Broechem-Ranst (BE)
(72) Inventor: Sebrechts, Jan, B-2520 Broechem-Ranst (BE)
(74) Representative: Donné, Eddy

(56) References cited:
- EP-A- 0 001 703
- EP-A- 0 343 285
- DE-A- 3 922 974
- FR-A- 610 770
- GB-A- 1 564 242
- NL-A- 8 902 036

## Description

This invention applies to an arrangement for training plants as well as an operating procedure and device for the embodiment of the aforementioned arrangement.

The invention has been intended primarily to be utilized in the culture of tomatoes, especially the culture of tomatoes in hothouses. In general the invention can, however, also be applied to the training of all kinds of plants.

It is known that during their growth tomato plants are trained along a suspended rope, in addition this rope is being extended and more and more inclined during the plant's growth, in such a manner that the plants attain a great length, with consequently a large yield.

It is also known that to this end arrangements for training plants are used consisting of a holder and a piece of rope wound on this holder. Upon the beginning of growth the holder is attached over the plant involved and unwound untill the rope reaches the plant. During growth the plant is trained by means of the rope. During the progression of the plant's growth it is trained ever more into an inclined direction. To this end the holder is moved sideways by continuously attaching it in another position, further away from the plant, all the while unwinding rope from the holder.

The aforementioned arrangements are generally realized by means of specialized firms, equipping each holder with a well-determined quantity of rope.

An example of such known arrangement is disclosed in NL-A-8902036, in which a rope is wound on a holder constructed of folded steel wire.

These known arrangements show the characteristic that the rope can only be removed from the holder by unwinding. Upon starting it is therefore necessary to first undo ten to fifteen windings in order to let the rope reach the plant. In applying such arrangements the disadvantage arises that the initial unwinding of the rope is a time consuming activity, especially in the case of several thousands of arrangements to be hung in a hothouse.

An arrangement in which the rope can be removed without unwinding, only by exerting a pulling force to its end, is known from EP-A-0 343 285. This arrangement comprises a holder with a receptacle which can be provided with a quantity of rope and with means for the fixation of the rope to the holder. This arrangement also shows the disadvantage that the release of the initial portion of rope, i.e. the portion of rope to be provided between the holder and the soil, which is aproximately 2 meters, is time consuming as the rope has to be taken by its end, and has to be pulled down by said end until this end reaches the soil, wherafter it has to be fixed once again to said fixation means. This is a time consuming and difficult movement, especially when a hothouse has to be provided of some thousands of said arrangements. Furthermore the length of the initially released portion of rope is dependent on the action carried out by the person which is installing the arrangements in the hothouse and it is clear that due to inaccuracy the length may be too short or too long.

The present invention aims at an arrangement excluding the aforementioned disadvantage.

To this end the invention relates to an arrangement for the training of plants, comprising a holder and a rope connected to the holder, characterized in that said rope comprises two distinctly formed quantities, one of which being of predetermined length, and in that the arrangement is equipped with means allowing that said quantity of rope of predetermined length can be released from the arrangement at once without the necessity of unwinding this quantity of rope.

The aforementioned means preferably consist of arrangements with the rope in the device being present in the shape of at least two stocks, respectively a first stock intended to be unwound systematically and a second stock able to be detached completely in one go.

In a preferred implementation the first stock consists of a number of windings completely wound on the holder whereas the second stock consists of a number of windings kept together by means of an assisting means, such as an elastic band.

During the placement of the device in a hothouse it suffices to hook the holder to a specially provided support, followed by loosening the aforementioned elastic band, which causes the windings of the second stock to be released in one go, dropping the rope down the plant.

The invention also relates to an operating procedure and a device to realize the aforementioned arrangement, especially to provide the aforementioned holder with two stocks of rope.

The device according to the invention mainly consists of a winding mechanism; a support system into which a holder can be placed; and means, at least switchable between two positions, allowing by their switching two stocks of rope to be arranged at or on the holder.

With the intention to better show the characteristics of the invention, some preferred embodiments are described in the following without any limiting character, referring to the enclosed drawings, in which:
drawing 1 shows an arrangement according to the invention;
drawing 2 shows a detail of the arrangement in drawing 1;
drawing 3 shows the utilization of the arrangement in drawing 1;
drawings 4 to 7 show 4 variations of the arrangement according to the invention;
drawings 8 and 9 show a device according to the invention, for two different positions;
drawing 10 shows a cut along line X-X in drawing 9;
drawing 11 shows another device according to the invention.

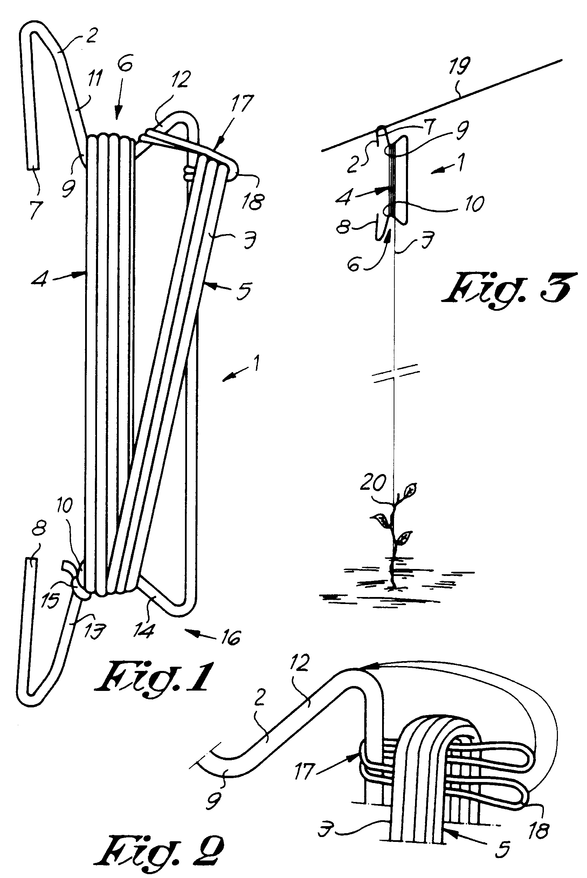

As shown in drawing 1 the arrangement 1 according to the invention mainly consists of a holder 2 and a rope 3 attached to holder 2. The particularity of the invention consists of the fact that the arrangement has been provided with means allowing a predetermined quantity of, rope 3 to be detached from the device at once. In the example shown these means consist of the fact that the rope 3 in arrangement 1 is present in the shape of at least two stocks, respectively a first stock 4, intended to be systematically detached, and a second stock 5 which can be completely detached in one go, by a simple action.

In the embodiment or drawing 1 the holder 2 has been constructed of folded steel wire or such. The holder 2 in addition shows a winding core 6 and two hooks 7 and 8. The winding core 6 has been constructed from 2 recessed parts 9 and 10 surrounded by the raised edges 11-12 and 13-14.

The hooks 7 and 8 allow the arrangement 1 to be attached to a wire or support in a hothouse.

The rope 3 has been attached to the holder 2 by means of a knot 15 or such. The first stock 4 of rope 3 has been wound on the winding core 6 and can only be detached, because of the presence of the raised edges 11-14, by systematically unwinding the rope 3.

The second stock 5 consists or a number or windings of rope 3 who are located next to the winding core 6 or who are as shown in drawing 1, only wound to one side 16 of it.

To prevent the second stock 5 from falling apart, means 17 can be provided to keep the rope 3 of the second stock 5 together. In the embodiment of drawing 1 these means 17 consist of an elastic band 18 put through the windings of the second stock 5 and fixed around the holder 2. The procedure to attach the elastic band 18 has been shown in detail in drawing 2.

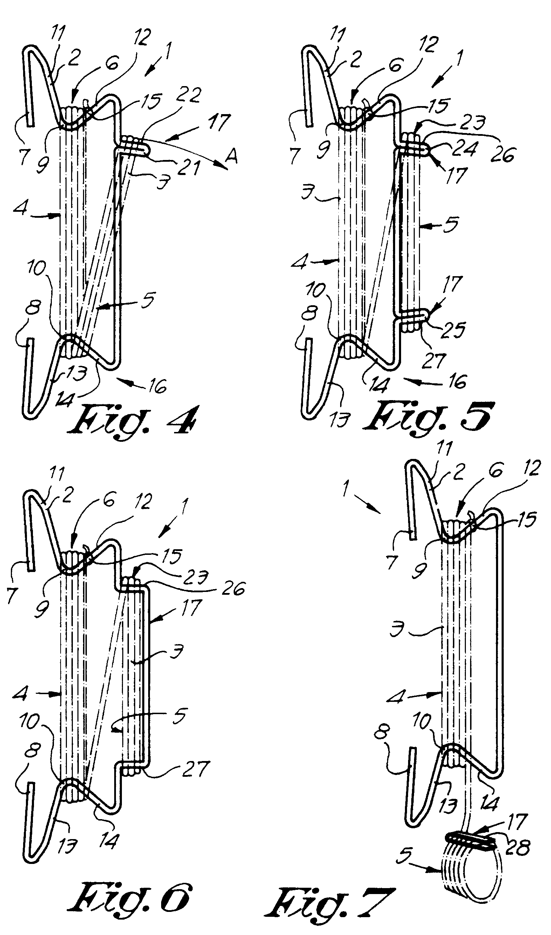

The utilization of arrangement 1 has been shown in drawing 3. The arrangement 1 is attached to a support, such as a drawn wire 19, by means of the hook 7 or 8 over the plant 20 to be trained. In order to let the rope 3 reach the plant 20, it suffices to loosen the elastic band 18, which results in releasing the second stock 5 then dropping down and apart. This offers enormous savings in time compared with the known arrangements in which the quantity of rope between the holder and the soil must be unwound.

During the plant's growth the holder 2 is systematically moved sideways along the support or wire 19 and the second stock 5 is systematically unwound as more rope 3 for the training of the plant 20 is being needed.

In drawing 4 a variation of arrangement 1 is shown in which the means 17 to keep the second stock 5 together consist of a winding part 21 created on holder 2, in such a way that during manufacture of arrangement 1 the second stock 5 can be wound around one side 16 of the aforementioned winding core 6 and the aforementioned winding part 21. The winding part 21 shows thereby a winding plane 22 that is directed in such a way that the second stock 5 can simply be detached by sliding it off the winding plane 22, especially as shown by arrow A in drawing 4.

In drawing 5 a variation is shown in which the means 17 consist of a separate winding core 23 for the second stock 5, constructed from two opposite winding parts 24 and 25. The winding planes 26 and 27 thereof are so located that the second stock 5 can be slid off winding core 23 without the windings having to be unwound one after the other.

In drawing 6 a variation of the embodiment of drawing 5 is shown, in which the winding core 23 shows another design.

The second stock 5 need not necessarily be attached to the holder 2. In drawing 7 for instance the second stock 5 consists of a number of windings kept together by a clamp 28 or such without this stock 5 being kept on the holder 2.

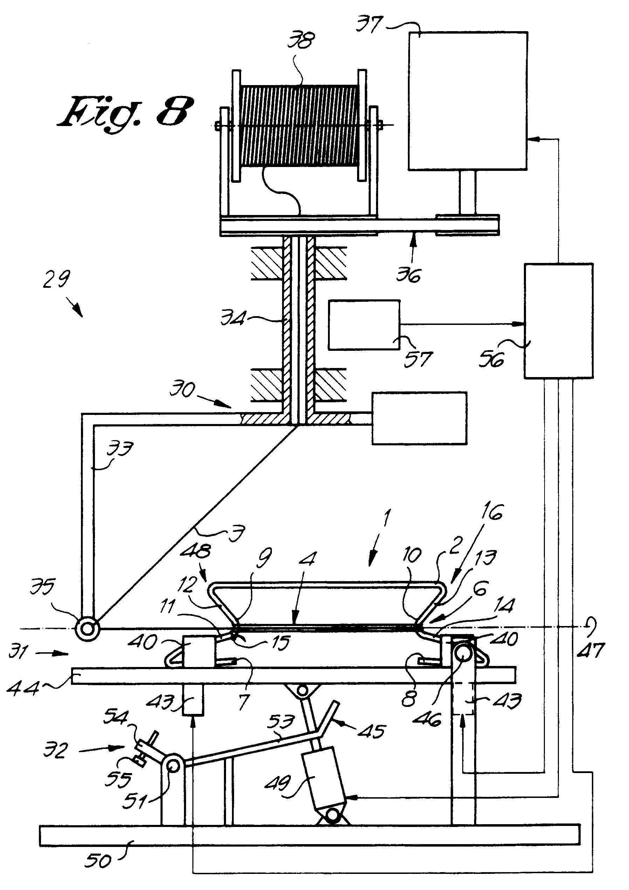

For the realization of arrangement 1 according to the invention a device 29 is preferably used as shown in drawings 8 to 10. The device 29 shown is here specifically intended to construct arrangement 1 as shown in drawing 1.

Device 29 consists mainly of a winding mechanism 30; a support 31 for attaching a holder 2; and means 32 to switch between at least two positions, allowing by their switching two stocks of rope, 4 and 5 respectively, to be formed on or at holder 2.

The winding device 30 mainly consists of a winding arm 33 preferably mounted on a vertical shaft 34 provided at its free end with a wire guiding eye 35 or such. The winding arm 33 is driven via transmission 36 by means of a motor 37. The shaft 34 is hollow, in such a fashion that a rope 3 from a stock 38, such as a bobbin, can be guided through this shaft 34 to the wire guiding eye 35.

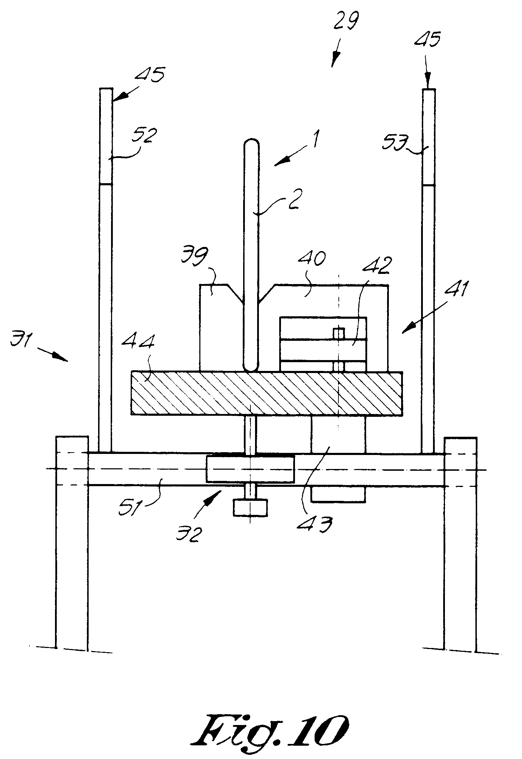

The support system 31 consists in the example shown of two clamps, between which holder 2 can be fixed by its ends. As shown in drawing 10 the clamps can consist of a fixed jaw 39 and a movable jaw 40. The movable jaw 40 can be moved by means of a transmission 41. Transmission 41 can be of any kind. In the example shown it exists of an eccentric cam 42 which can be rotated by means of an electromagnetic drive element 43, in such a fashion that jaw 40 can be moved toward jaw 39 or away from it.

The aforementioned switchable means 32 mainly consist of a tip-up element 44, on which the support 31 has been mounted and a winding support 45.

The tip-up element 44 can be turned around a shaft 46, all of which in such a fashion that a holder 2, having been placed in the support system 31 is on one side 16 always located on the winding plane 47 of the winding device 30, without regard to the position of element 44, whereas the other side 48 of holder 2 is located on the winding plane 47 or outside of it depending on the position of element 44.

The rotation can be obtained by means of a drive cylinder 49 or such like mounted between element 44 and frame 50 of the device.

The aforementioned winding support 45 can be moved, in such a manner that it can be brought into the winding plane 47. To this end the winding support 45 can be rotated around a shaft 51.

As shown in drawing 10 the winding support 45 preferably consists of two elements 52 and 53 that can be presented on both sides of the support system.

To move the winding support 45 it has been provided with a lever arm 54, with an adjusting screw 55, able to cooperate with the tip-up element 44, in such a manner that when the side 48 of holder 2 is outside winding plane 47 the winding support 45 is located inside the winding plane 47 and vice versa.

Motor 37, the drive elements 43 and the drive cylinder 49 are preferably controlled by a control and operating unit 56. This way the number of windings applied is checked by controls such as a revolution counter 57 or any other means. When the number of revolutions of the winding arm is known, the number of windings applied can also be determined from the time the winding arm has been switched on.

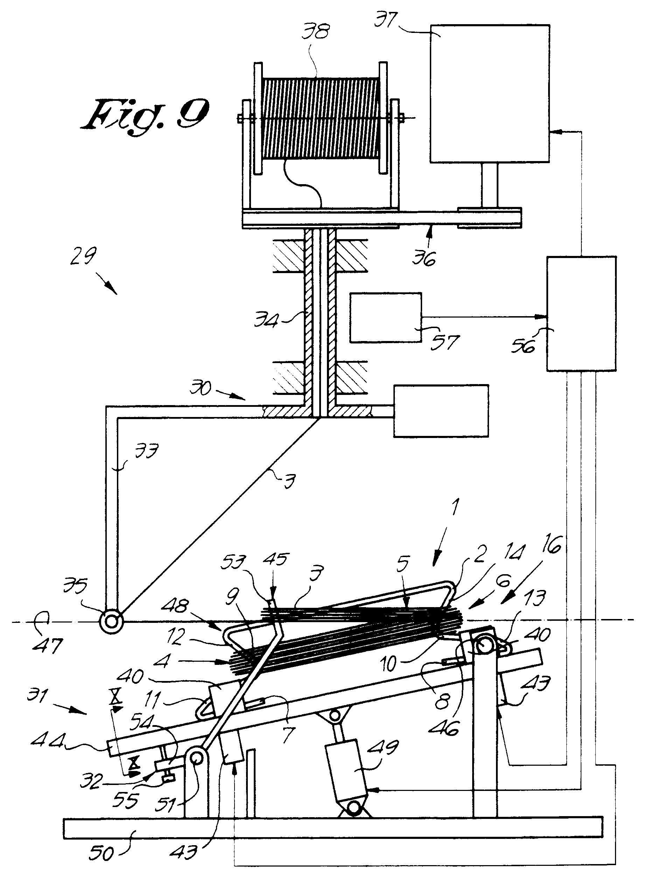

The use and the operation of the arrangement can simply be deduced from drawings 8 and 9.

First a holder 2 is fixed in the support system 31. Next the rope 3 is fixed to holder 2 by means of a knot 15. The drive cylinder 49 is in the extended position, in such a manner that the element 44 is in its highest position. Next motor 37 is switched on which causes the formation of a first stock 4 on the winding core 6 of holder 2 as shown in drawing 8.

After a predetermined number of windings is present on the winding core 6, which can for instance be detected by means of the revolution counter 57, element 44 is tipped down, preferably in an automatic manner, with the result that a situation arises as shown in drawing 9, in which now a second stock 5 is wound around, on the one hand, side 16 of the holder 2 and on the other hand, the winding support 45.

After both stocks 4 and 5 have been formed the rope 3 is cut and the second stock 5 fixed by means of an elastic band 18, for instance in the way shown in drawing 2. It is clear that winding and switching can be done automatically.

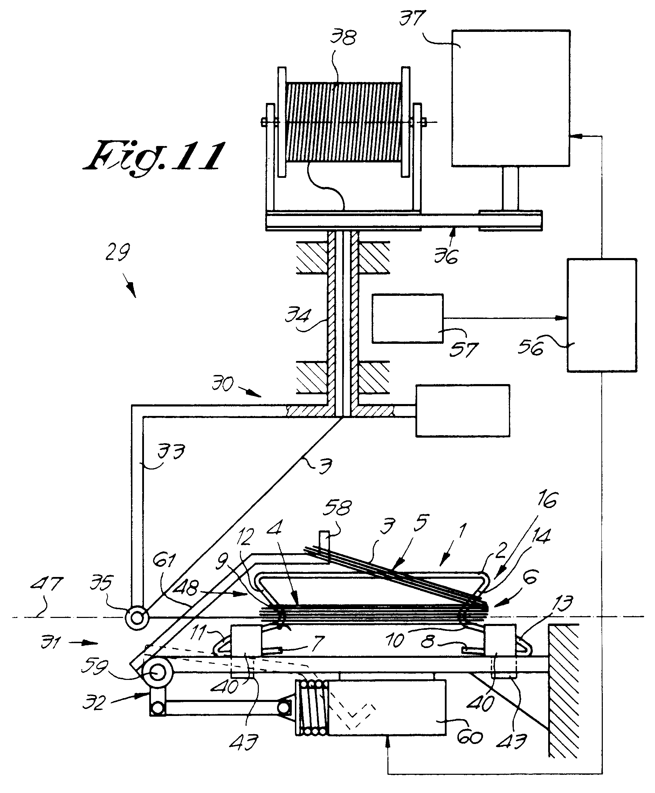

In drawing 11 a variation of device 29 is shown. The aforementioned switchable means 32 in this instance exclusively consist of a movable winding support 58. In the example shown this support 58 can be rotated around a shaft 59, this by means of a drive cylinder 60. The winding support 58 shows a guide 61, so constructed that during winding rope 3 is moved across this guide 61, by which means a second stock 5 next to winding core 6 can be formed, this in another winding plane.

During winding of the first stock 4 the winding support 58 is tipped over untill it extends outside winding plane 47. This way rope 3 is wound around winding core 6. After the first stock 4 has dropped down the winding support 58 is presented to winding plane 47, which, as shown in drawing 11, causes rope 3 to slide upwards along guide 61, so that the windings of the second stock are positioned around, on the one hand the winding support 58 and on the other hand side 16 of holder 2.

It is clear that according to a variation the winding mechanism 30 can also consist of the drive of support system 31. A winding arm 33 is no longer necessary then as the winding of rope 3 in that case is carried out by rotating holder 2.

The present invention also relates to the procedure followed, in that this procedure consists of first connecting rope 3 to a holder 2; next winding a quantity of this rope 3 on a winding core 6; and finally winding a second quantity of this rope 3 at least partly next to the aforementioned winding core 6 where it is kept together.

The present invention is in no way limited to the embodiments described as examples and shown in the drawings, but such an arrangement for training plants and the operating procedure and the device for the embodiment of the aforementioned device can be executed in different variations without exceeding the scope of the invention as defined by the claims.

## Claims

1. Arrangement for the training of plants, comprising a holder (2) and a rope (3) connected to the holder (2), characterized in that said rope (3) comprises two distinctly formed quantities, one of which being of predetermined length, and in that the arrangement (1) is equipped with means allowing that said quantity of rope (3) of predetermined length can be released from the arrangement (1) at once without the necessity of unwinding this quantity of rope.

2. Arrangement according to claim 1, characterized in that the aforementioned means consist of the rope (3) being present in the arrangement (1) in the form of at least two stocks (4,5), respectively a first stock (4) intended to be unwound systematically and a second stock (5) that can be completely released at once.

3. Arrangement according to claim 2, characterized in that it is equipped with means (17) to keep the second stock (5) together.

4. Arrangement according to claim 3, characterized in that the means (17) mainly consist of an elastic band.

5. Arrangement according to claim 3, characterized in that the means (17) mainly consist of a clamp (28).

6. Arrangement according to one of the claims 2 to 5, characterized in that the holder (2) shows a winding core (6); that the first stock (4) is wound on this winding core (6); and that the second stock (5) has been wound on one side (16) of the aforementioned winding core (6), but is located on the other side (48) next to this winding core (6).

7. Arrangement according to one or the claims 2 to 5, characterized in that the holder (2) shows a winding core (6) as well as a separately attached winding part (21) next to the winding core (6) and that the first stock (4) is wound on the winding core (6) and the second stock (5) is wound on, on the one hand one side (16) of the winding core (6) and on the other hand the aforementioned winding part (21), in addition to which the winding part (21) shows a winding plane (22) allowing the second stock (5) to be slid off the winding part (21).

8. Arrangement according to one of the claims 2 to 5, characterized in that the holder (2) shows two winding cores (6, 23); that the first stock (4) and the second stock (5) each have been wound on one of these winding cores (6, 23); and that the winding core (23) on which the second stock (5) has been wound shows a winding plane, respectively winding planes (26, 27) allowing the second stock (5) to be slid off this winding core (23).

9. Arrangement according to one of the preceding claims, characterized in that the bolder (2) consists of a folded wire.

10. Arrangement according to one of the preceding claims, characterized in that the holder (2) is provided with a hook (7, 8) in order to attach the holder (2).

11. Procedure to manufacture an arrangement according to claim 1, characterized in that it comprises attaching a rope (3) to a holder (2); the winding of a first quantity of the rope (3) on a winding core (6) of the holder (2); and the winding of a second quantity of rope (3), in addition to which this second quantity is wound at least in part next to the aforementioned winding core (6).

12. Device for the manufacture of an arrangement according to claim 2, comprising a winding mechanism (30), characterized in that it further comprises a support system (31) for the attachment of a holder; and switchable means (32) switchable between two positions permitting by their switching that two distinctly formed quantities of rope are created on or at the holder, i.e. wound on said holder and/or near said holder.

13. Device according to claim 12, characterized in that the winding mechanism (30) mainly consists of a winding arm (33) driven by a motor (37).

14. Device according to claim 12 or 13, characterized in that the support system (31) consists of a number of jaws (39, 40) between which a holder (2) can be fixed.

15. Device according to claims 12 to 14, characterized in that the switchable means (32) mainly consist of a tip-up element (44) on which the support system (31) has been mounted and a movable winding support (45), in addition to which the tip-up element (44) and the winding support (45) are alternately movable in such a manner that the rope (3) in one position of the device is wound completely around a holder (2) placed in the support system (31), whereas in an other position the rope (3) is wound around on the one hand one side (16) of the aforementioned holder (2) and on the other hand the aforementioned winding support (45).

16. Device according to claim 15, characterized in that the winding support (45) can be freely tipped-up around a shaft (51) and cooperates with the aforementioned tip-up element (44) , especially that it is turned when the tip-up element (44) touches it.

17. Device according to one of the claims 12 to 14, characterized in that the switchable means (32) mainly consist of a moveable winding support (58) which can be positioned in the winding plane or the winding mechanism (30), in addition to which this winding support (58) is provided with a guide (61), in such a manner that the rope (3) can be wound in another plane than the aforementioned plane (47).

18. Device according to one of the claims 12 to 17, characterized in that it is provided with checking means (57) to count the number of windings and that it is furthermore provided with a control unit (56) in such a manner that the switchable means (32) are moved automatically after the aforementioned first stock (4) has been created.

## Patentansprüche

1. Anordnung zum Führen von Pflanzen, umfassend eine Halterung (2) und eine mit der Halterung (2) verbundene Schnur (3), dadurch gekennzeichnet, daß besagte Schnur (3) zwei unterschiedlich ausgebildete Quantitäten umfaßt, wovon eine eine vorbestimmte Länge aufweist, und dadurch, daS die Anordnung (1) mit Mitteln ausgestattet ist, die es gestatten, daß besagte Schnurquantität (3) von vorbestimmter Länge auf einmal von der Anordnung (1) freigegeben werden kann, ohne die Notwendigkeit des Abwickelns dieser Schnurquantität.

2. Anordnung gemäß Anspruch 1, dadurch gekennzeichnet, daß die vorgenannten Mittel aus der Schnur (3) bestehen, welche in der Anordnung (1) in Form von zumindest zwei Vorräten (4, 5) beziehungsweise einem ersten Vorrat (4), der dazu gedacht ist, systematisch abgewickelt zu werden, und einem zweiten Vorrat (5) vorliegt, der auf einmal völlig freigegeben werden kann.

3. Anordnung gemäß Anspruch 2, dadurch gekennzeichnet, daß sie mit Mitteln (17) ausgestattet ist, um den zweiten Vorrat (5) zusammenzuhalten.

4. Anordnung gemäß Anspruch 3, dadurch gekennzeichnet, daß die Mittel (17) in der Hauptsache aus einem elastischen Band bestehen.

5. Anordnung gemäß Anspruch 3, dadurch gekennzeichnet, daß die Mittel (17) in der Hauptsache aus einer Klammer (28) bestehen.

6. Anordnung gemäß einem der Ansprüche 2 bis 5, dadurch gekennzeichnet, daß die Halterung (2) einen Wickelkern (6) aufweist; daß der erste Vorrat (4) auf diesen Wickelkern (6) aufgewickelt ist und daß der zweite Vorrat (5) auf eine Seite (16) des vorerwähnten Wickelkerns (6) aufgewickelt worden ist, sich jedoch an der anderen Seite (48) neben diesem Wickelkern (6) befindet.

7. Anordnung gemäß einem der Ansprüche 2 bis 6, dadurch gekennzeichnet, daß die Halterung (2) sowohl einen Wickelkern (6) als auch ein separat angebrachtes Wickelteil (21) neben dem Wickelkern (6) aufweist und da der erste Vorrat (4) auf den Wickelkern (6) gewickelt ist und der zweite Vorrat (5) einerseits auf eine Seite (16) des Wickelkerns (6) und andererseits auf das vorerwähnte Wickelteil (21) gewickelt ist, wozu das Wickelteil (21) zusätzlich eine Wickelebene (22) aufweist, die es gestattet, den zweiten Vorrat (5) vom Wickelteil (21) gleiten zu lassen.

8. Anordnung gemäß einem der Ansprüche 2 bis 5, dadurch gekennzeichnet, daß die Halterung (2) zwei Wickelkerne (6, 23) aufweist; daß der erste Vorrat (4) und der zweite Vorrat (5) jeweils auf einen dieser Wickelkerne (6, 23) gewickelt worden sind; und daß der Wickelkern (23), auf welchen der zweite Vorrat (5) gewickelt worden ist, eine Wickelebene bzw. Wickelebenen (26, 27) aufweist, die es gestatten, den zweiten Vorrat (5) von diesem Wickelkern (23) gleiten zu lassen.

9. Anordnung gemaß einem der vorgenannten Ansprüche, dadurch gekennzeichnet, daß die Halterung (2) aus einem gefalteten Draht besteht.

10. Anordnung gemäß einem der vorgenannten Ansprüche, dadurch gekennzeichnet, daß die Halterung (2) mit einem Haken (7, 8) zur Befestigung der Halterung (2) versehen ist.

11. Verfahren zur Herstellung einer Anordnung gemäß Anspruch 1, dadurch gekennzeichnet, daß es das Befestigen einer Schnur (3) an einer Halterung (2) umfaßt; das Aufwickeln einer ersten Quantität der Schnur (3) auf einen Wickelkern (6) der Halterung (2); und das Aufwickeln einer zweiten Quantität der Schnur (3), wobei diese zweite Quantität zumindest teilweise neben diesem vorerwähnten Wickelkern (6) aufgewickelt worden ist.

12. Vorrichtung für die Herstellung einer Anordnung gemäß Anspruch 2, einen Wickelmechanismus (30) umfassend, dadurch gekennzeichnet, daß sie weiterhin ein Trägersystem (31) für die Befestigung einer Halterung umfaßt; und schaltbare Mittel (32), die zwischen zwei Positionen geschaltet werden können und durch ihr Schalten gestatten, daß zwei unterschiedlich ausgebildete Schnurquantitäten auf oder an der Halterung erzeugt, d.h. auf besagte Halterung und/oder neben besagte Halterung gewickelt werden.

13. Vorrichtung gemäß Anspruch 12, dadurch gekennzeichnet, daß der Wickelmechanismus (30) in der Hauptsache aus einem von einem Motor (37) angetriebenen Wickelarm (33) besteht.

14. Vorrichtung gemäß Anspruch 12 oder 13, dadurch gekennzeichnet, daß das Trägersystem (31) aus einer Anzahl von Backen (39, 40), zwischen denen eine Halterung (2) befestigt werden kann, besteht.

15. Vorrichtung gemäß Ansprüchen 12 bis 14, dadurch gekennzeichnet, daß die schaltbaren Mittel (32) in der Hauptsache aus einem Kippelement (44), auf dem das Trägersystem (31) montiert ist, und einem beweglichen Wickelträger (45) besteht, wobei das Kippelement (44) und der Wickelträger (45) abwechselnd so bewegt werden können, daß die Schnur (3) in einer Position der Vorrichtung ganz um eine im Trägersystem (31) angebrachte Halterung (2) gewickelt ist, während in einer anderen Position die Schnur (3) einerseits um eine Seite (16) der vorerwähnten Halterung (2) und andererseits den vorgenannten Wickelträger (45) gewickelt ist.

16. Vorrichtung gemäß Anspruch 15, dadurch gekennzeichnet, daß der Wickelträger (45) frei um eine Welle (51) gekippt werden kann und mit dem vorerwähnten Kippelement (44) zusammenwirkt, insbesondere, daß er gedreht wird, wenn das Kippelement (44) ihn berührt.

17. Vorrichtung gemäß einem der Ansprüche 12 bis 14, dadurch gekennzeichnet, daß die schaltbaren Mittel (32) in der Hauptsache aus einem beweglichen Wickelträger (58) bestehen, der in der Wickelebene des Wickelmechanismus (30) angebracht werden kann, wobei dieser Wickelträger (58) derart mit einer Führung (61) versehen ist, daß die Schnur (3) in einer anderen Ebene als der vorgenannten Ebene (47) gewickelt werden kann.

18. Vorrichtung gemäß einem der Ansprüche 12 bis 17, dadurch gekennzeichnet, daß sie mit Kontrollmitteln (57) zum Zählen der Anzahl von Wicklungen versehen ist und daß sie weiterhin mit einer Kontrolleinheit (56) versehen ist, derart, daß die schaltbaren Mittel (32) automatisch bewegt werden, nachdem der vorerwähnte erste Vorrat (4) erzeugt worden ist.

## Revendications

1. Agencement pour le palissage de plantes, comprenant un support (2) et une corde (3) reliée au support (2), caractérisé en ce que ladite corde (3) comprend deux tronçons formés de manière distincte, dont l'un a une longueur prédéterminée, et en ce que l'agencement (1) est équipé de moyens permettant de libérer ledit tronçon de corde (3) de longueur prédéterminée de l'agencement (1) en une fois sans devoir dérouler ce tronçon de corde.

2. Agencement selon la revendication 1, caractérisé en ce que les moyens précités sont constitués de la corde (3) qui est présente dans l'agencement (1) sous la forme de deux tronçons (4, 5), respectivement un premier tronçon (4) qui est destiné à être déroulé systématiquement et un deuxième tronçon (5) qui peut être libéré complètement en une fois.

3. Agencement selon la revendication 2, caractérisé en ce qu'il est équipé de moyens (17) pour solidariser le deuxième tronçon (5).

4. Agencement selon la revendication 3, caractérisé en ce que les moyens (17) sont constitués principalement d'une bande élastique.

5. Agencement selon la revendication 3, caractérisé en ce que les moyens (17) sont constitués principalement d'une pince (28).

6. Agencement selon l'une quelconque des revendications 2 à 5, caractérisé en ce que le support (2) présente une âme d'enroulement (6), le premier tronçon (4) est enroulé sur cette âme d'enroulement (6) et le deuxième tronçon (4) est enroulé sur un côté (16) de l'âme d'enroulement précitée (6), mais est situé sur l'autre côté (48) à proximité de cette âme d'enroulement (6).

7. Agencement selon l'une quelconque des revendications 3 à 5, caractérisé en ce que le support (2) présente une âme d'enroulement (6) ainsi qu'une partie d'enroulement fixée séparément (21) à proximité de l'âme d'enroulement (6), le premier tronçon (4) est enroulé sur l'âme d'enroulement (6) et le deuxième tronçon (5) est enroulé, d'une part, sur un côté (16) de l'âme d'enroulement (6) et, d'autre part, sur la partie d'enroulement précitée (21), et en ce que la partie d'enroulement (21) présente un plan d'enroulement (5) permettant de faire glisser le deuxième tronçon (5) hors de la partie d'enroulement (21).

8. Agencement selon l'une quelconque des revendications 2 à 5, caractérisé en ce que le support (2) présente deux âmes d' enroulement (6, 23), le premier tronçon (4) et le deuxième tronçon (5) sont chacun enroulés sur l'une des ces âmes d'enroulement (6, 23), et l'âme d'enroulement (23) sur laquelle le deuxième tronçon (5) est enroulé présente un plan d'enroulement, respectivement, des plans d'enroulement (26, 27) permettant de faire glisser le deuxième tronçon (5) hors de cette âme d'enroulement (23).

9. Agencement selon l'une quelconque des revendications précédentes, caractérisé en ce que le support (2) est constitué d'un fil métallique plie.

10. Agencement selon l'une quelconque des revendications précédentes, caractérisé en ce que le support (2) est pourvu d'un crochet (7, 8) pour fixer le support (2).

11. Procédé de fabrication d'un agencement selon la revendication 1, caractérisé en ce qu'il consiste à fixer une corde (3) à un support (2), à enrouler un premier tronçon de la corde (3) sur une âme d'enroulement (6) du support (2) et à enrouler un deuxième tronçon de corde (3), ce deuxième tronçon étant en outre enroulé au moins partiellement à proximité de l'âme d'enroulement précitée (6).

12. Dispositif de fabrication d'un agencement selon la revendication 2, comprenant un mécanisme d'enroulement (30), caractérisé en ce qu'il comprend par ailleurs un système de support (31) pour la fixation d'un support et des moyens de commutation (32) pour effectuer une commutation entre deux positions permettant de créer deux tronçons distincts de corde sur le support, c'est-à-dire, un tronçon enroulé sur ledit support et/ou un tronçon enroulé à proximité de celui-ci.

13. Dispositif selon la revendication 12, caractérisé en ce que le mécanisme d'enroulement (30) est constitué principalement d'un bras d'enroulement (33) entraîné par un moteur (37).

14. Dispositif selon la revendication 12 ou 13, caractérisé en ce que le système de support (31) est constitué d'un certain nombre de mors (39, 40) entre lesquels un support (2) peut être fixé.

15. Dispositif selon les revendications 12 à 14, caractérisé en ce que les moyens de commutation (32) sont constitués principalement d'un élément basculant (44) sur lequel le système de support (31) est monté et d'un support d'enroulement mobile (45), en ce que, en outre, l'élément basculant (44) et le support d'enroulement (45) peuvent être déplacés en alternance de telle manière que la corde (3), dans une position du dispositif, soit enroulée complètement autour d'un support (2) placé dans le système de support (31), tandis que, dans une autre position, la corde (3) sera enroulée, d'une part, autour d'un côté (16) dudit support (2) et, d'autre part, sur ledit support d'enroulement (45).

16. Dispositif selon la revendication 15, caractérisé en ce que le support d'enroulement (45) peut librement basculer autour d'un arbre (51) et coopère avec ledit élément basculant (44) et en ce que, en particulier, il tourne lorsque l'élément basculant (44) le touche.

17. Dispositif selon l'une quelconque des revendications 12 à 14, caractérisé en ce que les moyens de commutation (32) sont constitués principalement d'un support d'enroulement mobile (58) qui peut être disposé dans le plan d'enroulement du mécanisme d'enroulement (30), et en ce que ce support d'enroulement (58) est pourvu d'un guide (61) de telle manière que la corde (3) puisse être enroulée dans un autre plan que le plan (47) mentionné ci-dessus.

18. Dispositif selon l'une quelconque des revendications 12 à 17, caractérisé en ce qu'il est pourvu de moyens de contrôle (57) pour compter le nombre d'enroulements et en ce qu'il est par ailleurs pourvu d'une unité de commande (56) de telle manière que les moyens de commutation (32) soient déplacés automatiquement une fois que ledit premier tronçon (4) a été créé.
